# EUROPEAN PATENT SPECIFICATION

(11) **EP 2 830 304 B1**
(45) Date of publication and mention of the grant of the patent: **08.08.2018**
(21) Application number: 13005362.2
(22) Date of filing: 13.11.2013
(51) Int. Cl.: H04N 5/225, B60R 11/04

(54) **Video recorder**
Videorecorder
Enregistreur vidéo

(30) Priority: 23.07.2013 SG 201305670
(43) Date of publication of application: 28.01.2015
(73) Proprietor: Akenori Pte Ltd, 427447 Singapore (SG)
(72) Inventor: Kucheryuk, Dmitry, Singapore 426446 (SG)
(74) Representative: Beier, Ralph

(56) References cited:
- EP-A1- 1 625 976
- WO-A1-99/43242
- DE-A1- 10 237 607
- DE-A1-102009 018 515
- DE-C1- 19 647 200
- JP-A- 2012 076 691
- US-A1- 2004 119 881
- US-A1- 2007 041 725
- US-B1- 8 400 560

## Description

### FIELD OF INVENTION

The present application relates to a video recorder apparatus. More particularly, the invention relates to car digital video recorder possessing features for reducing degradation of captured video or image quality caused by stray optical radiation incident onto the image sensor of the video recorder.

### BACKGROUND OF THE INVENTION

Currently, car digital video recorders (car DVRs) are widely used for observation and registration of events occurring around a vehicle where the recorder is installed. Such devices allow to record both video and audio information related to situation around the car regardless of moving or stationary condition of the car. The recorded information can be useful in resolving disputes related to road and transport incidents. Although commonly known car video recorders are used for recording incidents outside the car, they can be also applied for recording information about conditions within the car if they are properly oriented within the car interior. The digital video recorder equipped with the versatile mounting mechanism can be installed not only in cars, but also in tracks, water vehicles, and other vehicles. Almost all car video recorders can work both with monochrome and with color video images.

Currently, car video recorders are widely available in the market and are produced by many companies, for example, DOD, Mio, Akenori, Papago, etc.

Usually, car video recorders are mounted in the front part of the car salon, often on the windscreen, on a rear-view mirror or on the top of the dashboard in the car salon, to provide sufficient forward view for the car video recorder. Mounting the video recorder is performed by means of one or several suckers attached to a support, or by using an adhesive applied on a flat surface of the support for fastening to the windscreen or dashboard. An element in the form of an arm is usually joined with the support, to which arm the housing of the video camera itself is attached by means of an universal hinged connection.

The patent US6389340 discloses a vehicle-mounted video recorder in which the mounting mechanism is composed of a pair of suction cups. The vehicle video recorder mounted onto the windscreen using foam adhesive can be found in the patent US7893958. Integrated system having both rear mirror and video recorder is set forth in the patents US5096287 and US8309907.

The car video recorder comprises a video camera directed outwards of the car salon, and a display facing inward the car interior, for example, towards the car driver. The display serves for representing information transmitted from the video camera or from the storage device of the video recorder. The display, if it is a sensitive one, can contain controls for controlling the video recording operation, or such controls can be located on a display housing along the edges of display area of the display. Such construction of housings of the video recorders enables rotation of the video camera and the display by means of hinged connection in any desired direction.

The general feature of the known car video recorders is the manner by which the video camera and/or its optical elements are arranged with respect to a camera housing and a windscreen aiming to provide clear video recording free from any visual hindrance. Since the video camera or its optical elements should be positioned so that video camera fixture does not impede observation, a field of vision of the video camera usually is directed away from the fixture and away from the housing of the video recorder.

However, in this case, the stray light rays reflected from the windscreen and impinging onto the optical elements (lens) of the camera tend to produce light patches on the image captured by the camera which leads to occurrence of artifacts in the image. If the artifacts are imposed on the important part(s) of the image, they may make the whole image or its some areas useless for identification purposes and resolving disputes in view of overlapping a part of image, and hence, the car video recorder fails to perform its designated task.

Specifically, such stray light patches impede video recorder work at night when light from sources external to the video recorder, for example, light of headlights of overtaking cars, light from the luminous screen of a mobile phone in hands of a driver or a passenger in the vehicle, light from street lights, etc., being reflected from the windscreen, gets to the video camera lens. Thus, during night-time such patches of stray light do not allow the clear video image of environment outside the car to be obtained. Therefore, it is deemed that the above mentioned devices are inadequate for providing desired recorded information during night time.

WO 99/43242 A1 discloses an optical assembly for mounting in a vehicle that employs a two piece assembly including a bracket having a front surface and a back surface and an optical device having a front surface and a lens element on the front surface. The back surface of the bracket is connected to the vehicle and the front surface of the optical device is removably attached to the back surface of the bracket. The lens element focuses an image through a windshield of the vehicle. In one embodiment of the present invention, the optical device further comprises at least one notch member and a support extension member and the bracket includes an opening and further comprises at least one groove member. The at least one notch member is positioned to removably attach to the at least one groove member, and the support extension member is positioned to removably attach to the opening. In one embodiment, the assembly is mounted to the vehicle windshield so that a driver of said vehicle has an unobstructed view of a road.

JP 2012-076691 A discloses to use a double-sided tape to attach a bracket to the inner side of a windshield wherein the optical device can be detachably attached to the bracket.

Also, at the car salon there can be dust and water steams which, if they get on the camera lens, can deteriorate the image quality. Thus, there are situations when extraneous influences in the form of rays of light, dust, fog and the like prevent receipting by the car video recorder a valid picture due to distortion of the image received by the video recorder. Images captured or recorded in such way can be significantly distorted in the presence of these extraneous influences. Consequently, a video recorder, in particular, car video recorder capable of resolving the shortcomings highlighted in the foregoing is highly desired. The present invention has been made with the aforementioned limitations in mind and is intended to overcome the vast majority of them.

### SUMMARY OF THE INVENTION

In order to overcome the aforementioned drawbacks, a video recorder is provided as set out in clams 1-5.

### BRIEF DESCRIPTION OF DRAWINGS

- Fig. 1: is one embodiment of the disclosed car video recorder with a display;
- Fig. 2: represents a perspective view of the housing of the car video recorder, as illustrated in Fig. 1, showing the fastening side of the housing;
- Fig. 3: illustrates a perspective view of the car video recorder mounted onto a windscreen or a glass pane with exploded view;
- Fig. 4a-4c: represents cross-sections through the housing of the video recorder and the car windscreen;
- Fig. 5: illustrates other possible forms of the housing; and
- Fig 6: shows further embodiment of the housing.

### DETAILED DESCRIPTION OF THE INVENTION

One skilled in the art will readily appreciate that the present invention is well adapted to carry out the objects and obtain the mentioned advantages, as well as those inherent therein. The embodiments described below are not intended to be considered as limitations of the scope of the invention. In the description below the terms "video recorder", "car video recorder", "video recorder apparatus" and "car digital video recorder" denote the same and are used interchangeable.

The terms "camera" and "video camera" denote the same are used interchangeable.
The terms "optical elements" used herein throughout of the specification refers to such components of the video camera as a lens responsible for directing the optical radiation to image sensor of the camera for providing the sensor with a possibility to generate, from the forwarded optical radiation, digitized images of the events happened around.
The terms "strayed optical radiation", "stray light" used interchangeable herein throughout the specification refer to optical radiation bringing into contact, by either refraction or reflection with the optical elements of the camera out of the defined field of vision or angle of view of the camera. The strayed optical radiation may create, but not necessary, deceptive illusions or parasitic images onto the recorded information or create light patches on the image captured by the camera which lead to occurrence of undesired artifacts in the image.
The video recorder may be accommodated to be mounted to a windscreen or any glass pane, and in the present specification the terms "windscreen" and "glass pane" are used interchangeable. However, for the purposes of simplicity only, the following description is provided with respect to the windscreen.
The main parts of a car digital video recorder are a video camera, a control and processing block, a storage and a display.

Video camera consists of various electronic and optical components known in the art to digitally generate, record and/or transmit the captured information. The components required to implement the video camera may include a flexible integrated circuit board, computing processor, RAM, digital writing and storage medium, optical (image) sensor, optical lens, and the like. It is possible to accommodate the assembly of video camera partially or wholly inside the housing according to different embodiments. The camera through its optical elements (objective, lens) acquires external radiation falling on the image sensor, generates a video signal (video image) which is transferred to the control and processing block. The video camera of the disclosed video recorder may be equipped with a communication module for receiving/transmitting digital information from/to the control and processing block if it is arranged out of the housing of the video recorder.
The control and processing block performs controlling operations of the video recorder, processes the video image acquired by the video camera and generated by its image sensor, may perform compression of the video image for reducing data volume, and transfers the obtained data to the storage for recording to it and/or to a video display. Usually, the storage is of electronic or magnetic type, such as flash-memory, a hard disk or an optical disk and the like, as well known to those skilled in the art.
The display reproduces the image transferred to it from the video camera directly or read out from the storage device. Controls for controlling the operation of the video recorder may be positioned on the display, if the display is of touch-screen type, on the video recorder housing near the display area or may be arranged in the control and processing block. The display may be attached to the housing and be arranged above, below or sideways from the housing. Fixation of the display to the video recorder housing, for example, may provide a possibility of rotation of the display around a vertical axis, if the display is fastened sideways from the housing, or around a horizontal axis, if the display is fastened above or below the housing. Other commonly known kind of attaching the display to the housing should be apparent to a skilled person. Moreover, the display may also be detachable or be fully separated from the video recorder housing. Communications between the display and the video camera and/or the control and processing block are implemented either by wire or wirelessly or by combination thereof.

The car digital video recorder is described below with references to figures, where similar reference positions denote similar elements. It should be noted, that the figures illustrate the video recorder not in the scale.

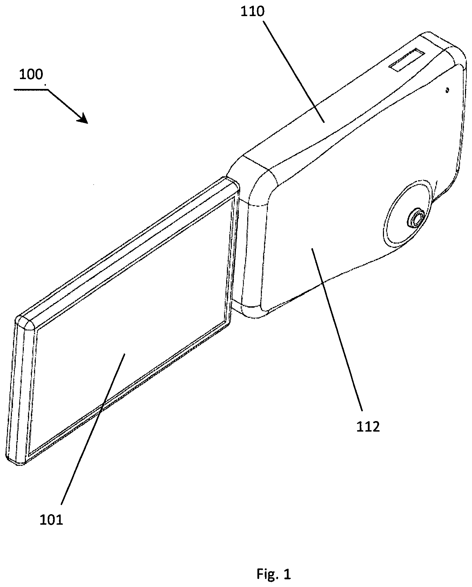

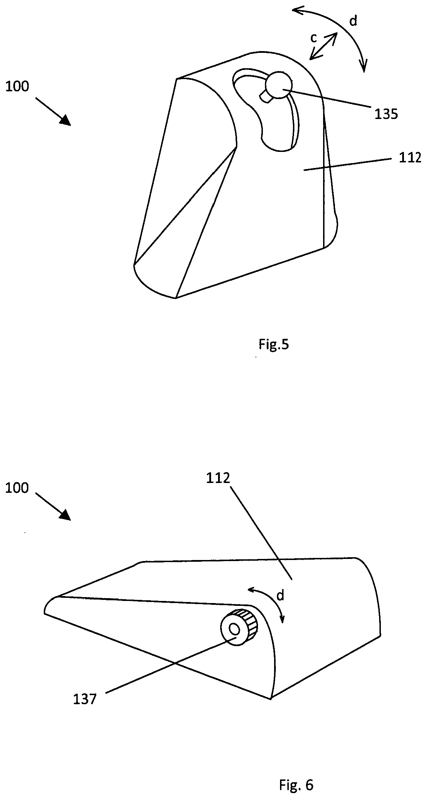

In Fig. 1 an example of a general view of the video recorder (100) which has a housing (110) and a display (101) is illustrated. In one embodiment, the housing has a form of parallelepiped with the rounded off corners and the rounded off edges between sidewalls (facets). However, the video recorder housing may have various forms, for example, rectangular in the plan, oval in the plan, the irregular form, etc. Several possible appearances of the video recorder housing form are provided in Figs. 5 and 6. The general requirement to the housing is isolating its internal space from stray external light, moisture, dust, etc. and presence of a window only through which the external "useful" radiation can get to the housing interior and hit in the video camera lens.

In the embodiment, where the housing is of parallelepiped form, the size of front side of the housing in any one dimension may be within the range of about 25 - 150 mm, preferable about 30 - 70 mm, while the housing thickness is about 4 - 60 mm, preferable about 10-25 mm. It shall be noted that the sizes of the housing are not limited by the cited numerical values which are presented as examples only and may be set individually, in appropriate manner for each particular realization of the video recorder. Therefore, the indicated sizes in practical realizations may be more or less than are presented above.

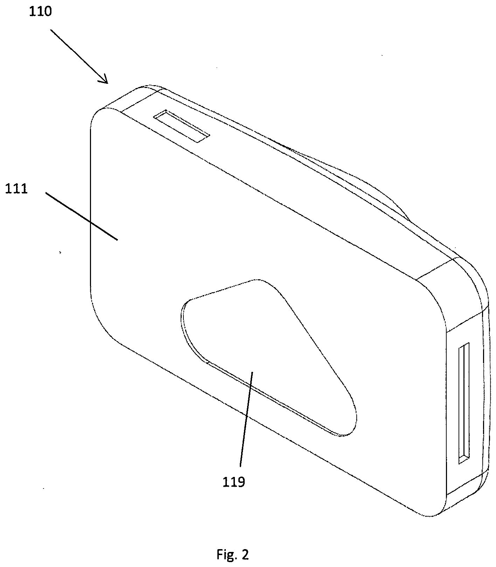

With references to Fig.2, the invented car video recorder (100) is shown having the housing (110). Preferably, the housing (110) is fabricated from plastic, metal or alloy material with good mechanical strength properties. Regardless of the material, the housing shall not significantly affect the overall weight of the video recorder to ensure the video recorder is light enough to be attached onto the windscreen or a glass pane without much difficulty and have mechanical strength sufficient to provide integrity of the housing while being detached from the windscreen.

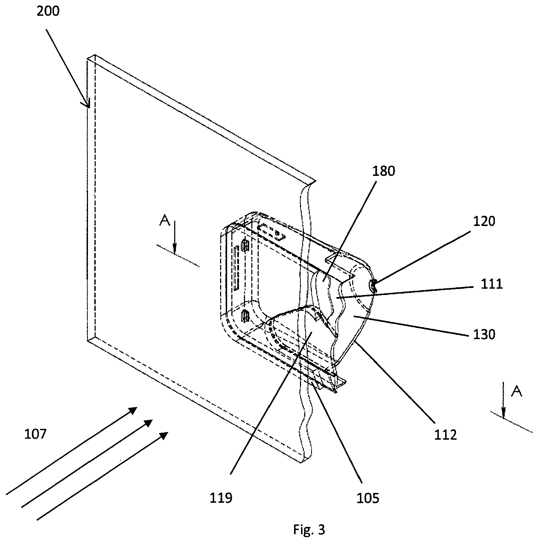

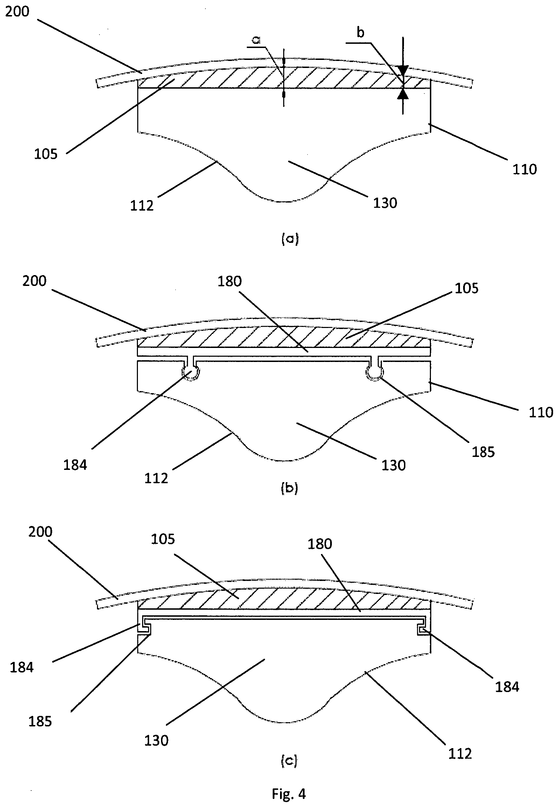

The housing (110) by its sidewalls, including a front side (111) and a back side (112) being at least partially spaced apart at a predetermined distance, defines an enclosed cavity (130) as illustrated in Figs. 3 and 4, for accommodating therein the video camera and, in some embodiments, the control and processing block.

In general, the front side and the back side are not identical in shape. The back side of the housing may be convex (as shown in Figs.1, 4, 5, and 6). In contrast, the front side is substantially flat, and with help of the flat surface of the front side the video recorder may be fastened to the windscreen directly or by additional means. This front side having a substantially flat surface in the present description is also referred to in the description as the fastening side for mounting video recorder housing to the windscreen. The fastening side is designated by a reference position (111) in figures. It should be noted that the fastening side is not indicated in Figs. 5 and 6.
The convex shape of the back side significantly increases the volume of the defined cavity allowing more components to be accommodating therein. The convex configuration of the back side also creates greater distance in between the front side and at least a part of the back side providing greater flexibility for the disclosed video recorder to adjust the relative position of the optical elements of the video camera within the housing to ensure, for example, the optimal field of vision. The fastening side (111) of the housing has a window (119) of arbitrary form and in some embodiments is closed by a panel from a transparent material, which is flush with the surface of the fastening side. Preferably, the form of the window is a rectangular occupying as much surface area of the fastening side as possible. In other embodiment the window can be left open, thus creating an opening. Nevertheless, in some embodiments, the window (119) in the fastening side (111) of the housing is encompassed by a closed surface of the fastening side.
The external optical radiation denoted in Fig.3 as (107), for example, visible light or IR-radiation, passes into the housing through the window only and falls into the optical elements of the video camera. It is important to be noted herein that the present embodiment requires that at least the optical elements of the video camera to be installed within the defined enclosed cavity (130) of the housing (110) and to be protected from entering of the strayed optical radiation inside the housing by the housing sidewalls. Accordingly, optical elements of the camera are arranged to receive optical radiation passing sole through the formed window (119) on the fastening side (111) of the housing and the windscreen (200) to finally land on the optical elements (lens) of the video camera only.

The internal surface of the cavity may be covered with non-reflective paint or non-reflective material. The non-reflective coating absorbs optical radiation entering the cavity through the window and bringing into contact with the internal surface without being reflected inside the cavity. The non-reflective coating further negates unwanted light or optical radiation reflection within the cavity.

In some embodiments the video recorder has, between the windscreen or a glass pane and the flat surface of the front side of the video recorder housing, a means for mounting the video recorder to the windscreen in detachable manner.

In one embodiment such means is represented by a gasket (105) in form of pliable sheet from elastic (resilient) material, such as rubber or foamed material. The gasket also has an opening with the form and arrangement substantially coinciding with the form and arrangement of the window (119) in the fastening side (111) of the housing (see Fig.3). Although the Fig. 3 shows that the gasket opening has the same size as the window (119) in the fastening side, the gasket opening can be cut off in order to have a some larger size, for example, by 1-3 mm in each direction along the window (opening) plane, so as not to prevent the external radiation inclined under some angle to the lens axis for falling onto the video camera optical elements within the housing.

The gasket has two opposing planar surfaces coated with adhesives to detachably fix on the windscreen and the fastening side of the housing, respectively. A layer of a first adhesive substance for providing attachment of the gasket to the fastening side (111) of the housing of the video recorder is applied on the one planar surface of the gasket (105). A layer of the second adhesive substance is applied on another planar surface, opposite to the first one, of the gasket for fastening the gasket to the windscreen. The first adhesive substance and the second adhesive substance can be differing from each other or identical.

Thus, the housing (110) of the video recorder by its fastening side (111) is fastened to the windscreen by means of the intermediate gasket (105) on which planar surfaces the first and the second adhesive substances are applied.

The chemical formulation of the first adhesive substance and the second adhesive substance are not a subject of the present invention. The basic requirement for the adhering properties of these substances consists in that they should hold the weight of the whole recorder in its mounted-to-the-windscreen state without additional assistance of, for example, mechanical, supporting means. I.e. fastening strength of one adhesive substance, applied onto one surface of the gasket, with the windscreen and fastening strength of another adhesive substance, applied onto another surface of the gasket, with the housing should allow to maintain the video recorder in its mounted (operating) state.

It is preferred that the second adhesive leaves no residues on the windscreen after detachment of the disclosed video recorder from the windscreen.

Other requirements for the properties of adhesive substances can be transparency, non-toxicity, preservation of adhesion properties for a long time, etc.

The gasket (105) of an elastic material is described referring to Fig.4a, where the sectional view along the line A-A (shown in Fig.3) through the housing of the video recorder attached in its mounted operating state to the windscreen is illustrated. The windscreen can have a small curvature which is given while manufacturing the windscreen for the purpose of providing aerodynamic properties to the moving car. This curvature might not provide to the flat fastening side of the video recorder housing a possibility to be in close contact with the windscreen over the whole surface area of the fastening side. In one embodiment, pliability of the gasket inserted between the windscreen and the housing allows the housing to universally fix onto windscreen of various dimension and curvature and therefore allows for the elimination of this drawback since, owing to its elastic properties, in the mounted state of the video recorder to the windscreen a middle part and edge parts of the gasket have different degree of compression (designated as ***a*** and ***b*** in Fig.4) to conform the curvature of the windscreen. The thickness of the gasket (105) may be from within 1 to 8 mm, preferable within the range of 2 to 4 mm. Although in Fig.4 the sectional views of the video recorder are shown along the line A-A directed horizontally, it should be apparent that the conformation remains consistent across the gasket (105) along any another direction. Thus, the gasket shall have the cross-section providing close contact of the housing with the windscreen.

According to another preferable embodiment, the fastening side of the housing of the video recorder has the form conformed the windscreen curvature. In this embodiment, the gasket may not be required, and one adhesive substance for applying on the fastening side (111) of the housing for attaching the video recorder directly to the windscreen is required only. Requirements to properties of this adhesive substance are similar to those described above.

According to one more preferable embodiment, the means for mounting the video recorder to the windscreen may be the gasket (105) in combination with a plate (180) having a form in a plan view preferably coinciding with the form of the fastening side in a plan view. The plate is physically rigid and is made from plastic, metal, etc. and also has an opening in the form and arrangement substantially coinciding with those of the window in the housing fastening side. The plate has two opposing planar surfaces on one of which is attached the gasket with the adhesives, to fix onto the windscreen, and another planar surface of the plate is provided with a first locking profile. In this case the housing has the counterpart locking profile being fashioned to detachably interlock with the first locking profile to mount the housing to the plate in the male-female locking manner. The thickness of the plate is within the range from 1 to 8 mm, however, any other values for the thickness may be used.
The mentioned structure is represented in more details in Fig.4b and 4c.
Fig. 4b shows the plate (180) having two opposing planar surfaces, one fabricated with a pair of male locking profile (184) and another fixed to the gasket (105) fastened to the windscreen. The male locking profile (184) in Fig. 4b in this embodiment is at least one pair ball structures. Each ball structure has one side integrated with the plate planar surface. Correspondingly, the pair of compatible spherical hollows which serve as the female locking profile (185), is engraved at the fastening side (111) of the housing (110). Each hollow has opening slightly smaller than the diameter of the ball structures. The ball structures preferably possesses good elasticity which allows the ball structure to be temporarily deformed while being inserted into or removed out of the holes through the smaller opening. More preferably, the spherical hollow may be slightly smaller in size than the ball structure to facilitate snug engagement of the male (184) and female locking profiles (185). Such fastening should provide reliable fixing of the video recorder in its operating state to the windscreen without self-detaching.

In one more embodiment, the ball structures are replaced by at least one pair of parallel ridges extending longitudinally on the plate (180), and the fastening side (111) has corresponding pair(s) of corresponding grooves to slidably interlock with the ridges. The ridges should not be necessarily having a round cross-section, they might be in L-form or any another form which allows tight attachment of the housing (110) to the plate (180). Fig. 4b can be considered as a cross-section of such ridges / grooves. Further embodiment illustrated in Fig. 4c, the plate (180) has two L-shaped opposing lateral latches, as the male locking profile (184), to be slidably engaged by compatible protrusions with two opposing grooves, as the female locking profile (185), located on the fastening side (111) of the housing (110). As a result of the sliding the fastening side window matches the plate opening for the realization of mounting the housing for the operation of the disclosed video recorder (100).

When fixing the plate (180) with the housing (110) is made by the lateral latches entering into corresponding grooves in the housing thus allowing to fix the housing (110) to the plate (180), the detachment of the housing from the plate is performed by bending back the lateral latches.

In further embodiment, the means for fixing the plate (180) to the housing (110) of the video recorder, instead of several elements of the male locking profile, may have the male locking profile in the form of single continuous ridge extending along all periphery edge of the plate (180). The mentioned ridge engaging with a counterpart groove similarly extending along all periphery of the housing. In such case the plate with the ridge may be considered as a "basin" for inserting the housing by its grooves into it, and the material of the ridge should have corresponding elastic properties allowing unbending the ridge for inserting in and removing the housing into / from the "basin".
Here, it is necessary to notice that the male (184) and female (185) locking profiles are interchangeable in between the plate (180) and the fastening side (111) of the housing (110). In this case the thickness of the plate (180) shall have the size allowing fabricating therein a corresponding locking profile, for example, hollows for ball structures, to provide secure of the plate with housing. By means of the structure exemplary illustrated on any of Fig.4a, 4b, 4c, the possibility of intended removal of the housing of the video recorder from the windscreen is provided. In the embodiment illustrated in Fig.4a, one can demand, in some cases, replacement of the gasket (105) with a new one in view of damage of the former after repetitive cycles of attachment and detachment, in other cases the detachable joining without damage of the gasket (105) is made due to the adhesive properties between the gasket and the windscreen. Besides of this, in another embodiment the housing (110) may be hingeably secured to the plate (180) such that the housing is able to rotatably switch from a first position, where the fastening side is abutted onto the plate (180), to a second position, which is 90 to 240 degree different from the first position, where the fastening side is not contacted with the plate. The hinge secure may be provided by an axial fixture at edge of the plate for enabling pivoting motion of the housing relatively the plate. The axial fixture may be provided at a left or right edge of the plate or at an upper or a lower edge thereof. Such construction facilitates movement of the housing (110) from the first position to the second position in which the optical elements (120) enable the video camera to record situation around the camera, for example, the situation of the interior cabin of the vehicle, while the plate remains fastened to the windscreen via the gasket.
By means of providing the housing in the form mentioned above the enclosed cavity defined by the housing walls is created. In the cavity within the housing the video camera optical elements (see Fig.3) are provided. While the field of vision of the video camera in the known video recorders is usually directed away from the housing where the video camera is arranged, without passing through the interior of the recorder housing, in contrast, the video camera has a field of vision directed inwardly the housing (110) and is oriented towards the window in the fastening side. Thus, the video camera is arranged in such way that external radiation, for example visible or IR-light passing from the outside the car through the windscreen, gets on the optical elements of the video camera only through the window (119) in the fastening side of the video recorder housing. Thus, the video camera receives the external radiation, generates an image from the radiation by methods known in the art and either records the image in the storage device or, if the recording function is not currently active, transmits the image directly to the display of the video recorder for displaying it to a user, for example, to the car driver in real-time.
The mechanism of mounting the video camera within the housing cavity is not a subject of the present invention. The video camera may be fixedly secured to the back side opposite to the fastening side of the housing, may be fixed within the housing by supports attached to the lateral sides of the housing, etc.
The range of viewing angle or field of vision of the disclosed video recorder (100) depends on the constructive implementation of the optical elements of the video camera and physical dimensions of the housing (110), in particular, the sizes of the window (119) at the fastening side (111). Additionally or separately, the field of vision of the optical elements may be dependent on the relative distance between the front window (119) and the optical element especially in the condition where the fastening side (111) of the housing is partly overlapping with the field of vision of the camera. The viewing angle of the video recorder employed in the present embodiment may be within the range of ±0.5 to ±89.5 degrees relatively the optical axis of the video camera, preferable within the range of from ±30 to ±70 degrees and the most preferable within the range of from ±35 to ±60 degrees horizontally. The same numerical values may be provided vertically for the viewing angle of the video recorder.
In some embodiments the mounting mechanism provides the video camera with a possibility to be rotated relatively an axis being normal to the optical axis of the video camera, for example, as indicated as arrow "*d*" in Fig.5 or Fig.6. In the embodiments the camera has a possibility of rotation by means of a handle (135) attached to the camera or its optical elements and extended from the back side of the housing, as illustrated in Fig.5. (It should be noted that the recorder housing is illustrated in Figs 5 and 6 not in the state of fastening to the windscreen, the mounted state of the housing corresponds to one where the back side (112) is situated from below.) The user, for example, the car driver may grasp the camera handle (135) and pull it down or up thus causing turn of the camera round the axis normal to the optical axis in order to change up or down, respectively, the direction of the camera optical axis. The turn of the video camera may be similarly performed by a wheel (137), as indicated in Fig. 6 by the arrow "*d*". In further embodiment the user has a possibility to move the camera position within the housing along the camera optical axis either toward the windscreen or away from it also by grasp the camera handle (135), as indicated by arrow "*c*" in Fig.5. The constructive implementation of the mechanism providing such displacement of the camera along its optical axis should be apparently construed by those skilled in the art.

Further, the camera of the present embodiment can perceive visible light or infra-red radiation. The type of optical radiation perceptible relies on the sensor of the camera. The image sensor of the disclosed embodiment is preferably capable of generating image based on optical radiation of visible or infrared light. Apart from that, the optical elements of the present embodiment are placed within the cavity of the housing (110) to avoid strayed optical radiation while conventional vehicle video recording systems generally have the optical elements protruded outwardly from the housing. Although the present embodiment illustrates (for example, in Fig.3) that the optical axis of the optical element forms substantial a right angle with the windscreen surface, one skilled in the art shall recognize that the basic principles of the present embodiment may be applied for the like video recorders fastened to the windscreen having optical elements inclined at some angle different from 90° in relative to the windscreen. The construction of the video recorder may comprise the video camera optical axis retained approximately horizontally whereas the windscreen is tilted about horizon, and therefore, the video recorder viewing angle may be restricted from below the optical axis to a greater extent then from above.
The basic advantage of the present video recorder consists in placement of the video camera within the housing autonomously fixed to the windscreen in such way that the field of vision of the video camera is directed to the windscreen through the enclosed, perhaps except the window, cavity within the housing, wherein sidewalls of the housing prevent hitting light beams from stray light sources onto the video camera lens. In other words, stray light from the sources which are not in the field of vision of the camera, being reflected from the windscreen cannot fall onto the video camera lens. It allows for avoidance of occurrence, for example, parasitic light patches which can lead to distortion of details of the image generated by the video camera.
Video recorder design according to the present invention provides, besides of the advantage specified above, protection against hitting the fog into the housing or against sedimentation on the camera lens of dust or distortion of the images with cigarette smoke which may be present in the car interior, prevents occurrence of a moisture in the form of droplets on the lens when temperature suddenly changes, for example, upon the opening of a car door in cold temperature conditions, for example, in winter), etc. Preferably, the cavity is substantially hermetic against smoke, water vapor and/or dust upon mounting the housing onto the windscreen. For example, smoke of cigarette inside the vehicle may make way into the cavity blocking or deflecting the optical radiation if the cavity was not properly sealed. Likewise, water vapor inside the vehicle may condense onto the lens in the absence of proper sealing at the window. The sealing against smoke, water vapor and/or dust is preferably attained by fastening the video recorder housing as mentioned in the above description. Optionally, the window is further shielded with a transparent material to reinforce the sealing against the external agents. The transparent material preferably has refractive index substantially equal to that of air to ensure the optical radiation passed through thereof free from significant modification.
The inventive video recorder has usual for such devices means for image generating (such as a CCD array), processing (such as a video processor) and storing (such as a memory) intermediate and/or final information, and can also have the communication means for receiving/transmitting instructions or messages transferred by wires or in a wirelessly manner into/from the video recorder, etc.
The power supply for the video recorder may be provided from a built-in battery or external power supply unit connected to the video recorder by wires and energizing all electronic components of the video recorder. If the power is supplied from the built-in battery the housing has a corresponding compartment in which such battery is provided, if the power is supplied from the external power grid the housing should have corresponding sockets for connection it to such power supply.
It is to be understood that the present invention may be embodied in other specific forms and is not limited to the sole embodiment described above. Although the present invention was described relatively to the car video registers, those skilled in the art can readily recognize that the basic principles of the invention may be applied for surveillance cameras, video monitoring systems operating in gaseous and liquid environments including hostile and reactive environment, in the systems for monitoring technological process, in bathyscaphes, submarines, etc. Therefore, the scope of the present invention should be defined by the accompanied claims but not the particular examples described in the present specification.

## Claims

1. A video recorder (100) configured to be removable mounted on a windscreen (200) or a glass pane, the video recorder comprising:
a housing (110) having sidewalls, including a front side (111) and a back side (112), forming an enclosed internal cavity (130) within the housing (110), the front side (111) being substantially flat and having a window (119) through which only an external optical radiation from outside passes into the enclosed internal cavity (130), the housing is configured for removable attaching onto the windscreen (200) or the glass pane,
a video camera arranged within the internal enclosed cavity, wherein the optical axis of the video camera lens is oriented toward the window in such way that allows the video camera to acquire the optical radiation passed into the housing sole through the window and fallen onto the video camera image sensor, for obtaining an image signal from the acquired external optical radiation,
a gasket (105) of an elastic or resilient material, **characterized in that** the video recorder further comprises
a firm plate (180), wherein the gasket (105) and the plate (180) each has an opening substantially coinciding in the form and arrangement with the form and arrangement of the window (119) in the front side (111) of the video recorder housing (110) for matching the openings and the window with each other in the operating state of the video recorder, wherein the gasket (105) is attached to the plate (180) by a first adhesive substance applied on a first planar surface of the gasket,
wherein the video recorder is fastened to the windscreen (200) through the gasket (105) by means of a second adhesive substance applied on a second planar surface, opposite to the first planar surface of the gasket (105), thereby the housing (110) of the video recorder is fastened to the plate (180) in detachable manner,
wherein fastening of the housing (110) in detachable manner to the plate (180) is implemented by means of a counterpart locking profile (184, 185) being a single ridge located on the plate side along the whole periphery of the plate, engaging with reciprocal groove in the housing.

2. The video recorder according to claim 1, wherein the plate (180) having a form in a plan view coinciding with the form of the front side (111) of the housing in a plan view.

3. The video recorder according to claim 1 or claim 2, wherein the plate (180) has two opposing planar surfaces, wherein the gasket is attached on the first planar surface and wherein the second planar surface is provided with the locking profile (184, 185).

4. The video recorder according to claim 1, wherein the external optical radiation is at least one of visible light or IR-radiation.

5. The video recorder according to claim 1, wherein the window on the front side of the housing is surrounded by a closed surface of the mentioned front side.

## Patentansprüche

1. Videorecorder (100), der zum entfernbaren Montieren an einer Windschutzscheibe (200) oder einer Glasscheibe konfiguriert ist, wobei der Videorecorder Folgendes umfasst:
ein Gehäuse (110) mit Seitenwänden, einschließlich einer Frontseite (111) und einer Rückseite (112), zum Bilden eines umschlossenen internen Hohlraums (130) in dem Gehäuse (110), wobei die Frontseite (111) im Wesentlichen flach ist und ein Fenster (119) aufweist, durch das nur eine externe optische Strahlung von außen in den geschlossenen internen Hohlraum (130) passiert, wobei das Gehäuse zum entfernbaren Anbringen an der Windschutzscheibe (200) oder der Glasscheibe konfiguriert ist,
eine Videokamera, die in dem internen geschlossenen Hohlraum angeordnet ist, wobei die optische Achse der Videokameralinse in Richtung des Fensters auf eine solche Weise orientiert ist, dass die Videokamera die optische Strahlung erfassen kann, die in die Gehäusesohle durch das Fenster passiert und auf den Videokamerabildsensor fällt, um ein Bildsignal von der erfassten externen optischen Strahlung zu erhalten,
eine Dichtung (105) aus einem elastischen oder flexiblen Material, **dadurch gekennzeichnet, dass** der Videorecorder ferner Folgendes umfasst:
eine feste Platte (180), wobei die Dichtung (105) und die Platte (180) jeweils eine Öffnung haben, die in Form und Anordnung im Wesentlichen mit Form und Anordnung des Fensters (119) in der Frontseite (111) des Videorecordergehäuses (110) zusammenfällt, um die Öffnungen und das Fenster miteinander im Betriebszustand des Videorecorders in Übereinstimmung zu bringen,
wobei die Dichtung (105) mit einer auf eine erste planare Oberfläche der Dichtung aufgebrachten ersten klebenden Substanz an der Platte (180) angebracht ist,
wobei der Videorecorder an der Windschutzscheibe (200) durch die Dichtung (105) mit einer auf die zweite planare Oberfläche aufgebrachten zweiten klebenden Substanz gegenüber der ersten planaren Oberfläche der Dichtung (105) befestigt wird, so dass das Gehäuse (110) des Videorecorders auf lösbare Weise an der Platte (180) befestigt wird,
wobei das Befestigen des Gehäuses (110) auflösbare Weise an der Platte (180) mit einem Gegenarretierungsprofil (184, 185) implementiert wird, das eine einzelne Rippe ist, die sich auf der Plattenseite entlang dem gesamten Umfang der Platte befindet, um in eine Umkehmut in dem Gehäuse einzugreifen.

2. Videorecorder nach Anspruch 1, wobei die Platte (180) eine Form im Grundriss hat, die mit der Form der Frontseite (111) des Gehäuses im Grundriss zusammenfällt.

3. Videorecorder nach Anspruch 1 oder Anspruch 2, wobei die Platte (180) zwei gegenüberliegende planare Oberflächen hat, wobei die Dichtung an der ersten planaren Oberfläche angebracht ist und wobei die zweite planare Oberfläche mit dem Arretierungsprofil (184, 185) versehen ist.

4. Videorecorder nach Anspruch 1, wobei die externe optische Strahlung sichtbare Strahlung und/oder IR-Strahlung ist.

5. Videorecorder nach Anspruch 1, wobei das Fenster auf der Frontseite des Gehäuses von einer geschlossenen Oberfläche der erwähnten Frontseite umgeben ist.

## Revendications

1. Enregistreur vidéo (100) configuré pour être monté de manière amovible sur un pare-brise (200) ou une vitre, l'enregistreur vidéo comprenant :
un boîtier (110) ayant des parois latérales, incluant un côté avant (111) et un côté arrière (112), formant une cavité interne fermée (130) à l'intérieur du boîtier (110), le côté avant (111) étant sensiblement plan et présentant une fenêtre (119) à travers laquelle seul un rayonnement optique externe venant de l'extérieur passe dans la cavité interne fermée (130), le boîtier est configuré pour être attaché de manière amovible sur le pare-brise (200) ou la vitre,
une caméra vidéo agencée à l'intérieur de la cavité fermée interne, dans lequel l'axe optique de l'objectif de la caméra vidéo est orienté vers la fenêtre de manière à permettre à la caméra vidéo d'acquérir le rayonnement optique ayant traversé la semelle du boîtier à travers la fenêtre et retombant sur le capteur d'image de la caméra vidéo, pour obtenir un signal d'image à partir du rayonnement optique externe acquis,
un joint (105) en un matériau élastique ou résilient, **caractérisé en ce que** l'enregistreur vidéo comprend en outre
une plaque solide (180), dans lequel le joint (105) et la plaque (180) présentent chacun une ouverture coïncidant sensiblement dans sa forme et son agencement avec la forme et l'agencement de la fenêtre (119) dans le côté avant (111) du boîtier (110) de l'enregistreur vidéo pour faire correspondre les ouvertures et la fenêtre les unes avec les autres dans l'état de fonctionnement de l'enregistreur vidéo,
dans lequel le joint (105) est attaché à la plaque (180) par une première substance adhésive appliquée sur une première surface plane du joint,
dans lequel l'enregistreur vidéo est fixé au pare-brise (200) par le biais du joint (105) au moyen d'une seconde substance adhésive appliquée sur une seconde surface plane, opposée à la première surface plane du joint (105), le boîtier (110) de l'enregistreur vidéo étant ainsi fixé à la plaque (180) de manière détachable,
dans lequel la fixation du boîtier (110) de manière détachable à la plaque (180) est mise en oeuvre au moyen d'un profilé de verrouillage complémentaire (184, 185) étant une arête unique située sur le côté plaque le long de l'ensemble de la périphérie de la plaque, en prise avec la gorge correspondante dans le boîtier.

2. Enregistreur vidéo selon la revendication 1, dans lequel la plaque (180) ayant une forme sur une vue en plan coïncidant avec la forme du côté avant (111) du boîtier sur une vue en plan.

3. Enregistreur vidéo selon la revendication 1 ou la revendication 2, dans lequel la plaque (180) a deux surfaces planes opposées, dans lequel le joint est attaché sur la première surface plane et dans lequel la seconde surface plane est pourvue du profilé de verrouillage (184, 185).

4. Enregistreur vidéo selon la revendication 1, dans lequel le rayonnement optique externe est au moins l'un d'une lumière visible ou d'un rayonnement IR.

5. Enregistreur vidéo selon la revendication 1, dans lequel la fenêtre sur le côté avant du boîtier est entourée par une surface fermée du côté avant mentionné.
